# EUROPEAN PATENT SPECIFICATION

(11) **EP 4 182 646 B1**
(45) Date of publication and mention of the grant of the patent: **10.04.2024**
(21) Application number: 21740239.5
(22) Date of filing: 14.07.2021
(51) Int. Cl.: G01F 23/284, G01S 13/08

(54) **DEVICE AND METHOD FOR MEASURING A LIQUID LEVEL IN AN APPARATUS**
VORRICHTUNG UND VERFAHREN ZUR MESSUNG EINES FLÜSSIGKEITSSTANDS IN EINER VORRICHTUNG
DISPOSITIF ET PROCÉDÉ DE MESURE D'UN NIVEAU DE LIQUIDE DANS UN APPAREIL

(30) Priority: 15.07.2020 IT 202000017122
(43) Date of publication of application: 24.05.2023
(73) Proprietor: SAIPEM S.p.A., 20138 Milano (IT)
(72) Inventor: AVAGLIANO, Ugo, 20138 Milano (IT)
(74) Representative: Studio Torta S.p.A.
(86) International application number: PCT/IB2021/056347
(87) International publication number: WO 2022/013776

(56) References cited:
- WO-A1-2019/096623
- US-A1- 2005 127 924
- US-A1- 2017 219 332
- US-B2- 8 756 992
- US-B2- 10 591 344

## Description

### TECHNICAL FIELD

The present invention relates to a device and a method for measuring a liquid level in an apparatus, in particular a pressure apparatus and even more particularly in an apparatus of a urea plant.

The invention finds a preferred application, in particular, in apparatuses forming part of a high-pressure section of a urea production plant (urea plant), such as a urea synthesis reactor, a high-pressure stripper, a high-pressure carbamate separator, etc.

### BACKGROUND OF THE INVENTION

Measurement of the level of a fluid in high-pressure apparatuses for urea production is typically done with nucleonic (radioactive) or radar type instruments.

The operating principle of nucleonic type instruments is based on measuring the radiation emitted by a nuclear source which is not absorbed by the fluid whose level is to be measured in the apparatuses.

Typically, a nucleonic instrument has an emitting unit (source), installed inside a special (so-called "drywell") container housed inside the apparatus whose level must be measured and consisting of a wire or a series of point sources distributed longitudinally so as to emit radiation along the entire length of the measurement field, and a receiving unit (detector) installed outside the apparatus and generally consisting of one or more receivers.

Radioactive instruments generally provide satisfactory performance in terms of reliability and resolution (i.e. the smallest appreciable variation of the quantity under examination throughout the whole measurement range).

However, given the position of the source and receivers, measurements made with such instruments are strongly influenced by the thicknesses of the walls of the apparatus (in the specific application of the high-pressure apparatuses of a urea plant, as is general the case for apparatuses operating at high pressure, relatively large wall thicknesses are required), and by the geometry of the apparatus.

Therefore, when the apparatus has thick walls and/or complex geometry, measurements with poor resolution are obtained. This is the case, for example, of a stripper of a urea plant in the high-pressure section (i.e. the apparatus of a high-pressure section of a urea plant located downstream of the urea synthesis reactor and in which the carbamate is decomposed), which typically has a complex shape (in particular, a cylindrical bottom portion protruding inferiorly from a hemispherical dome) right at the bottom of the apparatus, where the liquid to be measured collects.

Due to the geometric complexity and in particular the diameter variations at the bottom of the apparatus, as well as the high thickness of the steel walls of the apparatus, the measurement resolution is very poor precisely in the low-level zone, i.e. where the liquid level is normally maintained while the system is running and which needs to be measured.

Other technical issues and disadvantages of radioactive meters result from:
- the need for highly radioactive sources due to the high thickness of apparatuses and their complex geometry;
- the need to confine the radioactive sources in order to ensure an adequate level of safety for operators;
- the need for the user to comply with applicable legal requirements for the introduction, handling and disposal of radioactive materials.

As an alternative to measuring with nucleonic (radioactive) instruments, it is known to use level meters based on radar technology.

This type of measurement is carried out by sending microwave pulses, generated by a transmitter, into the liquid whose level is to be determined. When a microwave pulse reaches the liquid phase which has a different dielectric constant than the gas phase, part of the pulse is reflected back to a receiver. The time difference between the transmitted and reflected pulse is converted into a distance, from which the liquid level is subsequently calculated.

The intensity of the reflection depends on the dielectric constant of the liquid whose level is to be measured: the higher the value of the dielectric constant, the more intense the reflection.

Typically, the solution developed for high-pressure urea apparatuses involves the use of a tube (a so-called "standpipe") connected at one end to a microwave transmitter and having the other end immersed in the liquid whose level is to be measured and which penetrates inside the tube. The function of this tube is to guide the microwaves emitted by the transmitter ("Guided Wave Radar") inside the process fluid.

Such a solution is shown for example in WO2013/036108A1.

However, configurations of the type now described (with a waveguide defined by a standpipe, i.e. a hollow tube) present additional issues, in particular:
- difficulty in detecting the reflected pulse that determines the measurement of the level of the process fluid inside the confined volume of the standpipe, especially when the process conditions are supercritical, i.e. the fluids have properties intermediate between those of gas and liquid (as for example in the case of a urea reactor) and therefore a low differentiation between the dielectric constants of the phases;
- difficulty in detecting the free liquid surface within the confined volume of the standpipe, accentuated by turbulent conditions for example during the chemical reaction of urea synthesis;
- the occurrence, inside the standpipe, of liquid phase crystallization and corrosion phenomena typical of a high-pressure urea environment;
- delay and discrepancy in the measurement when the volume change is abrupt due to the reduced communication area between the inside and outside of the standpipe;
- complex design/construction of the sealing system because the microwave transmission antenna is in direct contact with a process environment characterized by high temperatures and pressures and high chemical aggressiveness.

To overcome these problems at least in part, systems are available on the market in which the radar signal is transmitted through a waveguide in the form of an elongated solid rod (and not an internally hollow tube), with the lower end immersed in liquid.

An example is described in WO2019/096623A1.

However, using a solid rod as a waveguide has some drawbacks.

Firstly, since level measurement is carried out under dynamic conditions, i.e. a certain amount of liquid is continuously flowing in and out of the apparatus, the measurement is affected by the fact that liquid, flowing from the top to the bottom of the apparatus (as for example in the case of the high-pressure stripper of the urea plant) falls on the waveguide, altering the signal in transit along the waveguide and therefore the accuracy of the measurement.

In addition, the use of solid waveguides immersed in the process liquid results in some scattering of the measurement signal and the reflected signal in the surrounding environment.

US8756992 B2 discloses a guided wave level sensing probe extending through the wall of a vessel. At the measuring portion of the probe, passages are provided in the surrounding sleeve.

### SUMMARY OF THE INVENTION

An object of the present invention is to provide a device and a method for measuring a liquid level in a pressurized apparatus, in particular an apparatus of a urea plant, which are substantially free of the drawbacks evidenced herein of the known art; in particular, an object of the invention is to provide a device and a method of measurement which permit the use of a radar instrument (thereby avoiding the use of radioactive materials) while providing high resolution and accuracy of level measurement.

The present invention thus relates to a device and a method for measuring a liquid level in a pressurized apparatus, in particular a pressurized apparatus of a urea plant, as respectively defined in the attached claims 1 and 14.

The invention also relates to a pressurized apparatus, in particular an apparatus of a urea plant, as defined in claim 12.

Further preferred characteristics of the invention are indicated in the dependent claims.

The measuring device of the invention makes it possible to resolve the technical problems of traditional solutions, allowing reliable and accurate measurements of the level of process fluids in high-pressure urea apparatuses.

The device of the invention employs a radar-type instrument and a probe operating as a waveguide to guide microwaves in the process liquid: the probe is in the form of a solid rod (and not a hollow rod as in "standpipe" systems) and is associated with a special confinement cover that covers and protects the probe from the process liquid.

In this way, the measurement is always accurate and reliable, even in dynamic conditions (i.e. even if a certain quantity of liquid continuously enters and exits the apparatus, directly hitting the measuring probe): in fact, the cover, made of material suitable for the process conditions, protects the probe (the waveguide that transmits the microwaves) from the liquid flowing from the top to the bottom, preventing contact with the falling liquid from altering the measurement.

The cover, also made of conductive material (like the probe) and electrically connected to the probe, further serves to minimize dispersion of the measurement signal and the reflected signal in the surrounding environment, ensuring a significant improvement in the measurement.

At the same time, the device of the invention is not affected by any rapid changes in the level of the liquid to be measured or turbulence due to vapour generation, since the measurement is carried out in an open environment and not in a confined space as in the standpipe application.

The device and the measurement method in accordance with the invention thus make it possible to perform a level measurement which:
- is direct and does not require compensation for varying process conditions (i.e. density, conductivity, temperature and pressure);
- is independent of the geometry of the apparatus;
- occurs in the absence of radioactive materials and therefore without all the problems associated with the use of radioactive materials;

- has a simple and reliable sealing system;
- is reliable even under turbulent conditions, in supercritical phases and with an aggressive process fluid that tends to crystallize.

### BRIEF DESCRIPTION OF THE DRAWINGS

Further characteristics and benefits of the present invention will be apparent from the following description of a non-limiting example of an embodiment of it, with reference to the Figures of the attached drawings, wherein:
- Figure 1 is a schematic longitudinal sectional view of a lower end part of a pressurized apparatus, in particular a high-pressure stripper of a urea plant, provided with a measuring device for measuring a liquid level according to the invention;
- Figure 2 shows a variant of the measuring device shown in Figure 1;
- Figure 3 shows a further variant of the measuring device shown in Figure 1;
- Figure 4 shows a cross-sectional detail, according to the trace plane IV-IV in Figures 1, 2 and 3, of the device of the invention;
- Figure 5 shows a further embodiment of the measuring device of the invention;
- Figure 6 shows a cross-sectional detail according to the trace plane VI-VI in Figure 5;
- Figure 7 shows in enlarged scale a detail of the measurement device of Figure 5.

### DETAILED DESCRIPTION OF THE INVENTION

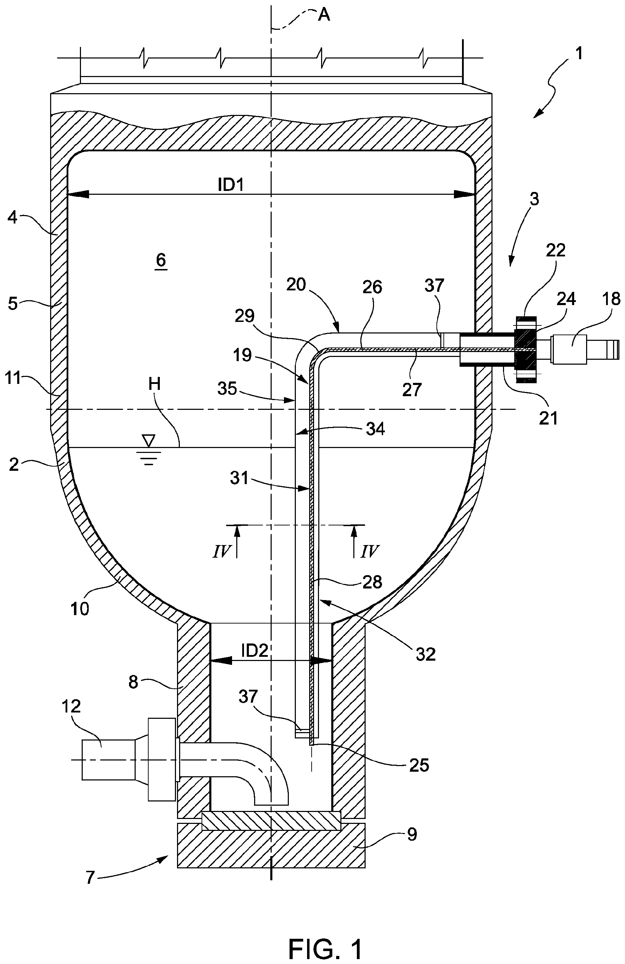

Figure 1 shows a pressurized apparatus 1, in particular a high-pressure stripper of a urea plant, of which only a lower part 2 is illustrated.

The apparatus 1 is provided with a measuring device 3 for measuring the level of a process liquid that collects in the lower part 2 of the apparatus 1, where the liquid attains a free surface H (which is assumed, here and hereafter, to be substantially horizontal in the absence of turbulence).

Although in the example described and illustrated herein the apparatus 1 is a stripper, the measuring device 3 of the invention also finds application in other apparatuses, for example (but not necessarily) in other apparatuses of the high-pressure section of a urea plant, such as in particular a urea synthesis reactor, a carbamate separator, or a carbamate condenser. It is also understood that the measuring device 3 of the invention may be used not only in apparatuses of the high-pressure section, but also in apparatuses in other sections of a urea plant.

In general, the measuring device 3 of the invention may be used in various apparatuses, even outside the urea production industry.

The apparatus 1 extends along a longitudinal axis A (generally vertical in use) and comprises a casing 4 having a side wall 5, arranged around the axis A, and delimiting an internal process chamber 6.

The casing 4 comprises, beginning at a lower end 7 of the apparatus 1: a substantially cylindrical end portion 8, enclosed by a bottom wall 9, located at the end 7; an intermediate domed (for example, substantially hemispherical) portion 10, located above the end portion 8; and a substantially cylindrical main portion 11, positioned above the intermediate portion 10 and having a diameter ID1 greater than the diameter ID2 of the end portion 8.

During normal operation of the apparatus 1, the casing 4 contains, in particular in the lower end part 2, a certain quantity of a process liquid, which in the present case (high-pressure stripper of a urea plant) flows from the top to the bottom of the apparatus 1 and collects in the process chamber 6 reaching a level defined by the free surface H; the level of the process liquid in the apparatus 1 is variable during the operation of the apparatus 1, hence the need to measure this level and monitor its changes over time.

The end portion 8 is provided with an outlet conduit 12, arranged for example through the side wall 5 of the casing 4 and elbow-bent towards the bottom wall 9.

The measuring device 3 comprises: a radar instrument 18 having a microwave emitter and a microwave receiver, in particular capable of emitting/receiving microwaves with a frequency between 100 MHz and 1.5 GHz; a waveguide probe 19 for transmitting microwaves; and a confinement cover 20 associated with the probe 19 and serving to protect the probe 19 from falling process liquid in the apparatus 1 and to minimize dispersion of the signal from the probe 19.

The radar instrument 18 is arranged outside the casing 4 and faces and is connected to a nozzle 21 that penetrates the casing 4 through the side wall 5 and is attached to the casing 4, for example, by means of a flange coupling (known and not illustrated). The radar instrument 18 is connected and secured to the nozzle 21 by means of a connector 22.

The radar instrument 18 and its related nozzle 21 may be located at different levels on the apparatus 1.

In general, the radar instrument 18 is positioned on the apparatus 1 at a level, measured parallel to the axis A, above the maximum level of the process liquid to be measured in the apparatus 1.

In the example shown in Figure 1, the radar instrument 18 and the nozzle 21 are arranged on the main (cylindrical) portion 11. Alternatively, also depending on the effective size of the apparatus 1, the radar instrument 18 and the nozzle 21 are arranged on the intermediate (domed) portion 10.

The nozzle 21 is arranged substantially transversely to the axis A through the side wall 5. In the embodiment of Figure 1, but not necessarily, the nozzle 21 is substantially perpendicular to the axis A and substantially horizontal.

Beneficially, the radar instrument 18 integrates both an emitter and a receiver, located in the radar instrument 18 itself.

The probe 19 enters laterally into the apparatus 1 and in particular inside the process chamber 6 through the nozzle 21 and extends between two opposite ends 24, 25 and in detail: a proximal end 24, connected to the radar instrument 18, and a distal end 25, positioned inside the process chamber 6 near the bottom wall 9 so as to be immersed in use in the process liquid.

The proximal end 24 of the probe 19 is coupled to the radar instrument 18 by means of the connector 22, which also acts as a sealing element around the probe 19.

The probe 19 has a solid rod body 26, made, entirely or at least for all its part intended, in use, to be submerged in the process liquid, of a conductive material, in particular a metallic material, capable of transmitting along the rod body 26 the microwaves generated by the radar instrument 18 and reflected towards the radar instrument 18.

The rod body 26 of the probe 19 is made of a material suitable for use in the process conditions in which the measuring device 3 is used, i.e. depending on the apparatus 1 in which the measuring device 3 is mounted. For example, in the exemplative case described herein, the rod body 26 is made of a material suitable to withstand the conditions typical of a urea environment, for example (316L urea-grade type) stainless steel, titanium, zirconium, or duplex or super duplex steel, preferably having a 25Cr/22Ni/2Mo composition.

The rod body 26 extends along a longitudinal profile that may have various shapes and different lengths, also depending on the size and type of the apparatus 1.

In general, the probe 19 (i.e. its rod body 26) comprises an upper connection portion 27, which extends from the proximal end 24 (connected to the radar instrument 18) and penetrates the apparatus 1 through the nozzle 21; and a lower measurement portion 28, which in use is at least partially immersed in the process liquid and terminates at the distal end 25.

The connection portion 27 and the measurement portion 28 may be variously oriented or arranged relative to one another.

For example, in the embodiment of Figure 1, the rod body 26 of the probe 19 follows an L-shaped longitudinal profile: the connection portion 27 and the measurement portion 28 are straight and substantially orthogonal to each other and joined by a curved joint portion 29; the connection portion 27 extends radially into the apparatus 1 substantially orthogonally to the axis A, and the measurement portion 28 extends parallel to the axis A.

In this configuration, the measurement portion 28 (defining the part of the probe 19 immersed in the process liquid) is immersed into the process liquid in an axial direction, that is, it extends parallel to the (vertical) axis A of the apparatus 1 and perpendicular to the free surface H of the process liquid (understood, as already indicated above, to be in the absence of turbulence).

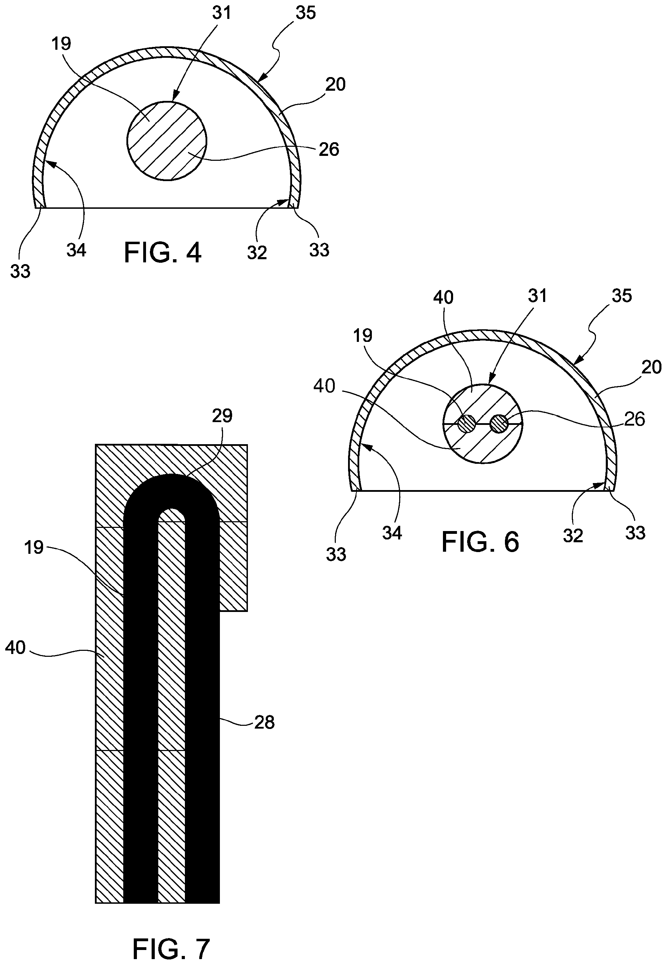

The rod body 26 may have a different cross-sectional shape, for example circular (as shown in Figure 4) or in the shape of a regular polygon (square, hexagon, etc.).

Preferably, the rod body 26 has a constant cross-section along the entire length of the rod body 26.

For example, the rod body 26 has a circular cross section and a diameter of between 5 mm and 30 mm (preferably approximately 20 mm).

The probe 19 is mechanically supported by the connector 22 and/or support elements (known and not shown), for example positioned in the nozzle 21 and/or on the wall 5.

With reference to Figures 1 and 4, the cover 20 is arranged around the probe 19 and in particular around the rod body 26 of the probe 19 and extends along the probe 19 following its longitudinal profile, whose shape it replicates.

The cover 20 surrounds the probe 19 externally and is radially spaced from a lateral surface 31 of the rod body 26.

The cover 20 has a longitudinally open cross-section so that it only partially surrounds the probe 19 angularly. In other words, the cover 20 is open around the probe 19 and is not closed in a ring around the probe 19, leaving a longitudinal opening 32 facing the lateral surface 31 of the rod body 26.

In this way, the formation of liquid stagnation zones is avoided, and it is possible for the gas phase present in the apparatus 1 to pass through.

The opening 32 is delimited laterally by a pair of opposing longitudinal edges 33 of the cover 20, facing and parallel to each other (Figure 4).

The cover 20 has a concave inner lateral surface 34 facing the lateral surface 31 of the rod body 26 of the probe 19, and a convex outer lateral surface 35 opposite the concave inner lateral surface 34.

The cover 20 extends around the probe 19 for an angular extent between approximately 150° and 250°.

For example, the cover 20 has a cross-section in the shape of an arc of a circle or an arc of an ellipse, parabola, or other conic.

In the embodiment shown in Figure 1, the cover 20 extends from the proximal end 24 of the probe 19, where the cover 20 is connected to the nozzle 21, to the distal end 25, where the probe 19 optionally protrudes out of the cover 20 with a short end section.

It is understood that the cover 20 may extend over a different length of the probe 19.

The cover 20 is positioned so that the inner lateral surface 34 faces the lateral surface 31 of the probe 19.

The cover 20 is positioned above the probe 19 so as to fully cover the vertical projection of the probe 19, meaning the projection of the probe 19 on a horizontal plane parallel to the free surface H of the process liquid and perpendicular to the axis A.

In particular, the cover 20 is located above the connection portion 27 and the joint portion 29, so as to protect the probe 19 from the process liquid flowing in the apparatus 1 from top to bottom; and is arranged alongside the measurement portion 28.

The cover 20 is also made of a material suitable for use in the process conditions of the apparatus 1.

In particular, the cover 20 is made of a conductive material, in particular a metal material, preferably a material of the same type, or the same material, as the probe 19.

The cover 20 is mechanically and electrically connected to the probe 19 by means of tie rods 37 extending, for example, radially between the inner lateral surface 34 of the cover 20 and the lateral surface 31 of the probe.

The tie rods 37 are arranged, for example, at the ends 24, 25 and/or spaced along the cover 20.

The tie rods 37, in addition to mechanically supporting the cover 20 by holding it in position with respect to the probe 19, also make the electrical connection between the cover 20 and the probe 19.

Appropriately, the tie rods 37 are made of the same material (or a material of the same type), in particular a metal material, as the cover 20 (and/or the probe 19).

In use, the measuring device 3 operates by implementing the measuring method of the invention as follows.

The emitter of the radar instrument 18 emits microwave pulses that travel along the probe 19 through the rod body 26 to the process liquid contained in the apparatus 1. The microwave pulse is reflected when it reaches the interface between the liquid phase and the gas phase (i.e. the free surface H), which have different dielectric constants. The reflected pulse is in turn transmitted from the probe 19 to the receiver of the radar instrument 18.

The level of liquid contained in the apparatus 1 is calculated by converting the time difference of the transmitted and reflected waves into distance, in particular by TDR (Time Domain Reflectometry). The calculation is carried out, for example, by a processing unit which is either integrated into the radar instrument or connected to it.

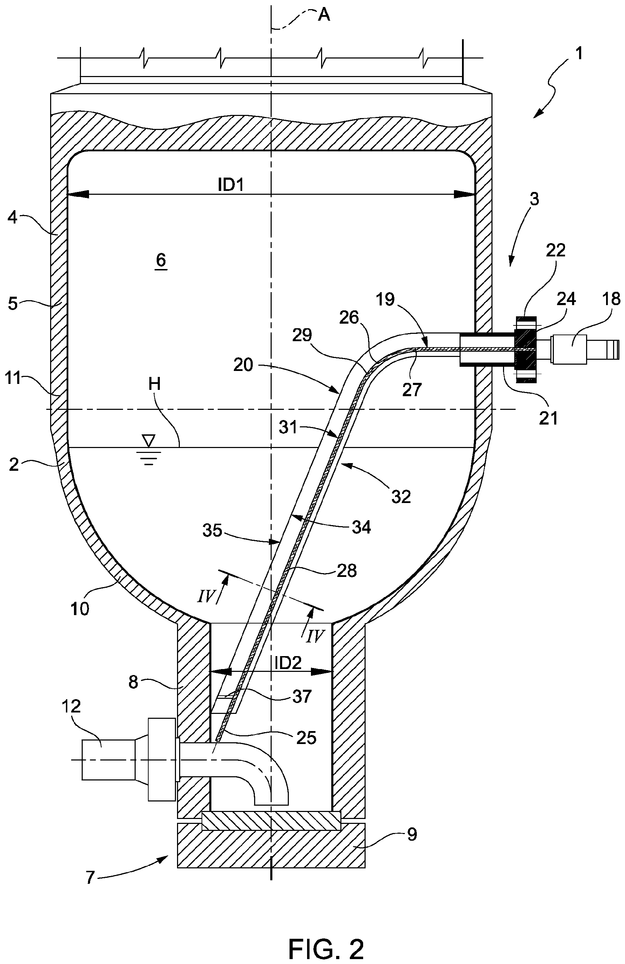

In the embodiment of Figure 2, in which details similar to or the same as those already described are indicated by the same numbers, the probe 19 again enters the apparatus 1 laterally, in particular through the nozzle 21. The probe 19 again comprises an upper connection portion 27 and a lower measurement portion 28, which are straight and joined by a curved joint portion 29.

The connection portion 27 extends radially in the apparatus 1 and substantially orthogonally to the axis A; while the measurement portion 28 is inclined with respect to the axis A and the free surface H of the process liquid (and not parallel to the axis A and perpendicular to the free surface H, as described above with reference to Figure 1). The measurement portion 28 and the connection portion 27 are inclined relative to each other by an angle greater than 90°, preferably between 120° and 180°.

In this configuration, therefore, the measurement portion 28 is immersed in the process liquid at an inclination: the portion of the probe 19 immersed in the process liquid extends obliquely with respect to the axis A of the apparatus 1 and the free surface H of the process liquid.

In this embodiment, as already described with reference to Figure 1, the probe 19 is also associated with a cover 20 covering the probe 19.

Again in this case, the cover 20 is arranged above the probe 19 so as to cover the vertical projection of the probe 19.

In particular, the cover 20 is positioned above the connection portion 27, the joint portion 29, and also the inclined measurement portion 28, so as to protect the entire probe 19 from the process liquid flowing in the apparatus 1 from top to bottom. The entire outer lateral surface 35 of the cover 20 faces upward (albeit partially inclined) and the entire opening 32 faces downward (partially inclined).

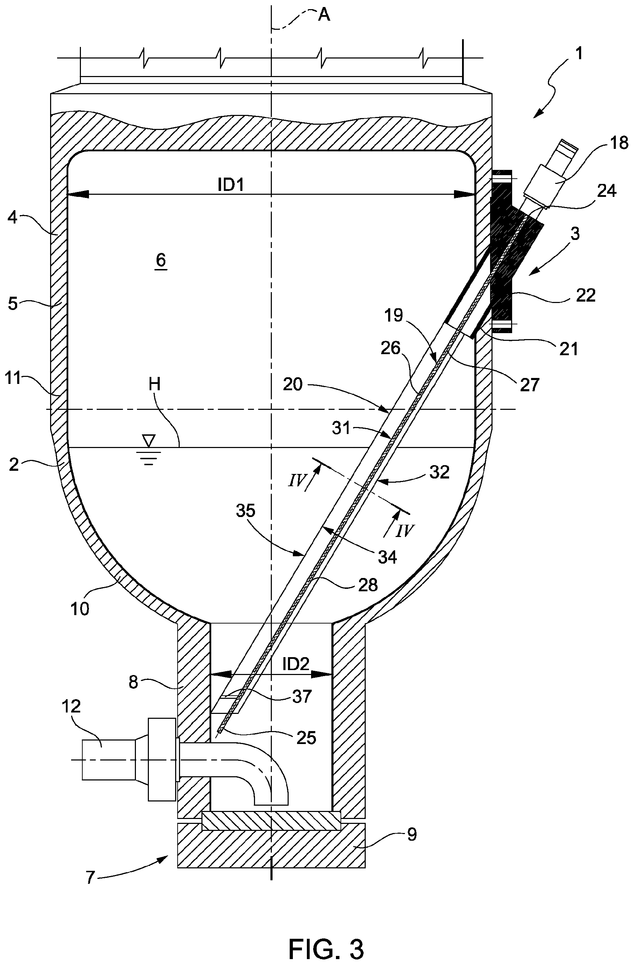

In the further embodiment of Figure 3, in which details similar to or the same as those already described are indicated by the same numbers, the nozzle 21 is again arranged through the side wall 5 of the casing 4, but instead of being perpendicular to the axis A it is inclined with respect to the axis A and the side wall 5.

In this case, the probe 19 is completely straight, i.e. it has an entirely straight rod body 26, and it is aligned with the nozzle 21. The probe 19 thus extends along a straight axis inclined with respect to the axis A.

The connection portion 27 and the measurement portion 28 are aligned with each other along a common straight axis inclined with respect to the axis A and the free surface H of the process liquid.

Accordingly, the cover 20 also extends parallel to the probe 19 and straight, with the outer lateral surface 35 inclined parallel to the probe 19 and facing upwards.

For example, the probe 19 is inclined at an angle of between 30° and 60° with respect to the axis A.

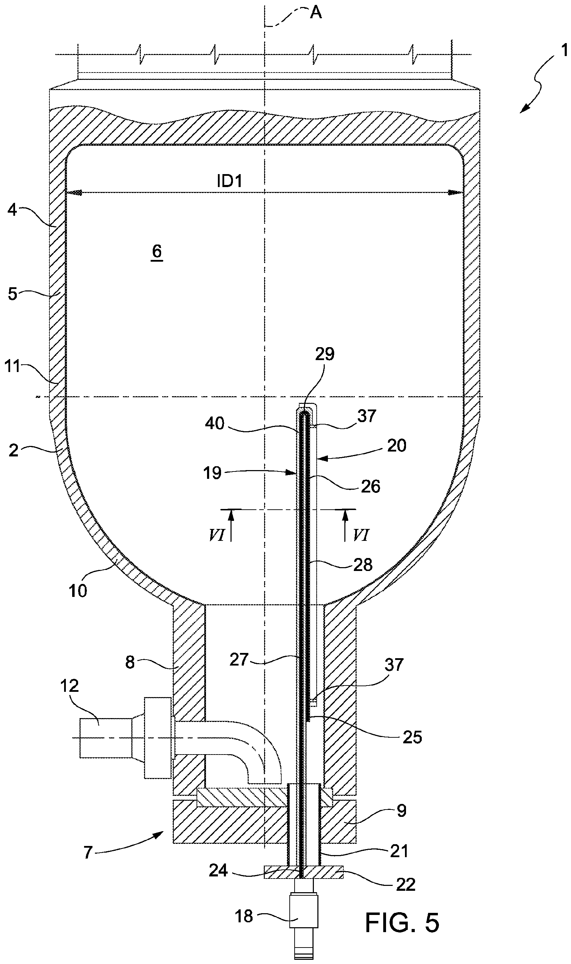

In the embodiment of Figure 5, in which details similar to or the same as those already described are indicated by the same numbers, the probe 19 is inserted into the apparatus 1 through the bottom wall 9.

The nozzle 21 is thus arranged through the bottom wall 9 and the radar instrument 18 is arranged below the nozzle 21 and the apparatus 1.

The probe 19 again extends from the radar instrument 18, to which it is connected by means of the proximal end 24.

In this case, the probe 19 has a profile which is bent by 180° and the rod body 26 of the probe 19 has a U-shaped longitudinal profile.

In particular, the probe 19 comprises a connection portion 27, which extends from the proximal end 24 connected to the radar instrument 18 and penetrates the apparatus 1 through the nozzle 21, and a measurement portion 28, which in use is at least partially immersed in the process liquid and terminates at the distal end 25.

The connection portion 27 and the measurement portion 28 are straight and substantially parallel to each other and to the axis A, and are joined by a U-shaped joint portion 29.

In this configuration, the measurement portion 28 (which is immersed in the process liquid) also extends parallel to the (vertical) axis A of the apparatus 1 and perpendicular to the free surface H of the process liquid.

With reference also to Figures 6-7, the probe 19 is partially covered by a covering sheath 40, arranged around the rod body 26 of the probe 19 on the lateral surface 31 of the probe 19.

The sheath 40, optionally made from several pieces joined together, has a closed cross-section around the rod body 26 and covers the lateral surface 31 of the probe 19, being in contact therewith.

The sheath 40 extends to cover in particular the connection portion 27 and the U-shaped joint portion 29. In contrast, the sheath 40 leaves at least part of the measurement portion 28 uncovered so that it is exposed to the process liquid.

The purpose of the sheath 40 is to isolate the rod body 26 of the probe 19 from the process environment at the connection portion 27, and it is therefore made of electrically insulating material capable of withstanding process conditions (particularly the conditions of a urea environment), such as ceramic materials or polymeric materials such as PTFE or PEEK.

Similarly to the description above, the probe 19 is again associated, at least in the part exposed to the process liquid, with the cover 20.

In particular, the cover 20 extends along the measurement portion 28, to which it is flanked laterally and faces as described above. The cover 20 extends above the joint portion 29.

Again in this case, the cover 20 is connected to the probe 19 by tie rods 37 which support the cover 20 and provide electrical continuity with the probe 19.

Finally, it is understood that further modifications and variations may be made to the device and the measurement method described and illustrated herein without thereby departing from the scope of the attached claims.

For example, according to further embodiments not shown, the probe 19 is inserted into the apparatus 1 from above, through an upper wall of the casing 4. The nozzle 21 is therefore arranged at the top of the apparatus 1 and is, appropriately, parallel to the axis A.

In this case, similarly to the description above with reference to Figure 3, the probe 19 may be completely straight, i.e. have an entirely straight rod body 26. The probe 19 thus extends along a straight axis and the cover 20 accordingly also extends straight and parallel to the probe 19.

The probe 19 may be substantially vertical and parallel to the axis A, with the cover 20 arranged laterally beside the probe 19 and the inner lateral surface 34 facing the lateral surface 31 of the probe 19; or inclined with respect to the axis A, with the cover 20 arranged above the probe 19, with the inner lateral surface 34 facing and above the lateral surface 31 of the probe 19.

## Claims

1. A device (3) for measuring a level of a process liquid in a pressurized apparatus, for example an apparatus of a urea plant, comprising a radar instrument (18) positioned in use outside the apparatus (1) and having a microwave emitter and a microwave receiver; a waveguide probe (19) for transmitting microwaves, defined by a solid rod body (26) and extending in use inside the apparatus (1) between a proximal end (24), joined to the radar instrument (18), and a distal end (25), immersed in use in the process liquid below a free surface (H) of the process liquid; and a confinement cover (20), arranged about at least a measurement portion (28) of the probe (19) at least partly immersed in use in the process liquid; the cover (20) being positioned above the probe (19) and along said measurement portion (28) of the probe (19) so as to surround the probe (19) externally, and being radially spaced from a lateral surface (31) of the probe (19); the measuring device (3) being **characterized in that** the cover (20) has a longitudinally open cross-section so that the cover (20) only partially surrounds the probe (19) angularly, leaving a longitudinal opening (32) facing the lateral surface (31) of the probe (19); the cover (20) extending about the probe (19) with an angular extent between 150° and 250°.

2. The measuring device according to claim 1, wherein the cover (20) has a concave inner lateral surface (34) facing the lateral surface (31) of the probe (19), and a convex outer lateral surface (35), opposite to the concave inner lateral surface (34).

3. The measuring device according to one of the preceding claims, wherein the cover (20) is positioned above the probe (19) so as to cover entirely a vertical projection of the probe (19), defined as projection of the probe (19) on a horizontal plane parallel to the free surface (H) of the process liquid, and thus to protect the probe (19) from process liquid flowing in the apparatus (1) from the top downwards.

4. The measuring device according to one of the preceding claims, wherein the cover (20) is made of a conductive material, in particular a metal material, preferably a material of the same type, or the same material, as the probe (19).

5. The measuring device according to one of the preceding claims, wherein the cover (20) is connected mechanically and electrically to the probe (19) by tie rods (37) extending between the cover (20) and the probe (19).

6. The measuring device according to one of the preceding claims, wherein the probe (19) comprises said measurement portion (28), that in use is at least partly immersed in the process liquid and ends with the distal end (25), and a connection portion (27), connected to the radar instrument (18) at the proximal end (24) of the probe (19).

7. The measuring device according to claim 6, wherein the connection portion (27) and the measurement portion (28) are rectilinear and substantially perpendicular to each other and joined by a curved joint portion (29); and wherein the connection portion (27) extends radially in the apparatus (1) substantially perpendicular to a longitudinal axis (A), vertical in use, of the apparatus (1), and the measurement portion (28) extends parallel to said axis (A); and wherein the cover (20) is positioned above the connection portion (27) and the joint portion (29) and laterally beside the measurement portion (28).

8. The measuring device according to claim 6, wherein the connection portion (27) and the measurement portion (28) are rectilinear and inclined with respect to each other and are joined by a curved joint portion (29); and wherein the connection portion (27) extends radially in the apparatus (1) substantially perpendicular to a longitudinal axis (A), vertical in use, of the apparatus (1), and the measurement portion (28) is inclined with respect to said axis (A); and wherein the cover (20) is positioned above the connection portion (27), the joint portion (29), and also the inclined measurement portion (28).

9. The measuring device according to claim 6, wherein the connection portion (27) and the measurement portion (28) are aligned with each other along a common rectilinear axis and the probe (19) is entirely straight; the probe (19) being inclined with respect to a longitudinal axis (A), vertical in use, of the apparatus (1); and wherein the cover (20) extends parallel to the probe (19) and rectilinearly and above the probe (19) .

10. The measuring device according to claim 6, wherein the probe (19) is to be inserted in the apparatus (1) from the top, through a top wall of the apparatus (1), and the connection portion (27) and the measurement portion (28) are aligned with each other along a common rectilinear axis; the probe (19) being inclined with respect to a longitudinal axis (A), vertical in use, of the apparatus (1), with the cover (20) positioned parallel to the probe (19) and above the probe (19).

11. The measuring device according to claim 6, wherein the probe (19) is to be inserted in the apparatus (1) from the bottom, through a bottom wall (9) of the apparatus (1); and the connection portion (27) and the measurement portion (28) are rectilinear and substantially parallel to each other and to a longitudinal axis (A), vertical in use, of the apparatus (1) and are joined by a U-shaped joint portion (29); and wherein the probe (19) is partially covered by a covering sheath (40) made of an electrically insulting material and having a closed cross section; the sheath (40) being positioned about the connection portion (27) and the joint portion (29), and leaving uncovered at least a part of the measurement portion (28) that remains exposed, in use, to the process liquid; and wherein the cover (20) is positioned laterally beside and facing the measurement portion (28) and above the joint portion (29).

12. A pressurized apparatus (1), for example an apparatus of a urea plant, provided with a measuring device (3) for measuring a level of a process liquid in the apparatus; **characterized in that** the measuring device (3) is a measuring device according to one of the preceding claims.

13. The apparatus according to claim 12, wherein the apparatus (1) is an apparatus that is part of a urea plant, in particular of a high-pressure section of a urea plant, for example a stripper, a urea synthesis reactor, a carbamate separator, or a carbamate condenser.

14. A method for measuring a level of a process liquid in a pressurized apparatus, for example an apparatus of a urea plant, comprising the steps of:
- sending microwave pulses along a waveguide probe (19), defined by a solid rod body (26) and extending inside the apparatus (1) below a free surface (H) of the process liquid;
- protecting the probe (19) from process liquid flowing from the top downwards in the apparatus (1) and minimizing signal dispersions from the probe (19) by means of a confinement cover (20) associated with the probe and arranged about at least a measurement portion (28) of the probe (19) immersed at least partly in the process liquid; the cover (20) being positioned above the probe (19) and along said measurement portion (28) of the probe (19) so as to surround the probe (19) externally, and being radially spaced from a lateral surface (31) of the probe (19);
- detecting pulses reflected by the interface between a liquid phase and a gas phase contained in the apparatus (1), and re-transmitted along the probe (19);
- calculating the level of the process liquid contained in the apparatus (1) from the difference between the travel times of the reflected and transmitted microwaves; **characterized in that** the cover (20) has a longitudinally open cross-section so that the cover (20) only partially surrounds the probe (19) angularly, leaving a longitudinal opening (32) facing the lateral surface (31) of the probe (19) so as to avoid stagnation of the process liquid between the cover (20) and the probe (19); the cover (20) extending about the probe (19) with an angular extent between 150° and 250°.

15. The measuring method according to claim 14, wherein the cover (20) is positioned above the probe (19) so as to cover entirely a vertical projection of the probe (19), in order to protect the probe (19) from process liquid flowing in the apparatus (1) from the top downwards.

16. The measuring method according to claim 14 or 15, wherein the cover (20) is made of a conductive material, in particular a metal material, preferably a material of the same type, or the same material, of the probe (19).

17. The measuring method according to one of claims 14 to 16, wherein the cover (20) is connected mechanically and electrically to the probe (19) by tie rods (37) extending between the cover (20) and the probe (19).

## Patentansprüche

1. Vorrichtung (3) zur Messung eines Stands einer Prozessflüssigkeit in einer Druckeinrichtung, zum Beispiel einer Einrichtung einer Harnstoffanlage, umfassend ein Radarmessgerät (18), das in Verwendung außerhalb der Einrichtung (1) angeordnet ist und einen Mikrowellenemitter und einen Mikrowellenempfänger aufweist; eine Hohlleitersonde (19) zum Übertragen von Mikrowellen, die von einem Vollstabkörper (26) definiert ist und sich in Verwendung im Inneren der Einrichtung (1) zwischen einem proximalen Ende (24), das an das Radarmessgerät (18) angegliedert ist, und einem distalen Ende (25), das in Verwendung unterhalb einer freien Oberfläche (H) der Prozessflüssigkeit in die Prozessflüssigkeit eingetaucht ist, erstreckt; und eine Begrenzungsabdeckung (20), die um mindestens einen Messabschnitt (28) der Sonde (19) angebracht ist, der in Verwendung zumindest teilweise in die Prozessflüssigkeit eingetaucht ist; wobei die Abdeckung (20) über der Sonde (19) und entlang des Messabschnitts (28) der Sonde (19) angeordnet ist, sodass sie die Sonde (19) außen umgibt, und radial von einer Mantelfläche (31) der Sonde (19) beabstandet ist; wobei die Messvorrichtung (3) **dadurch gekennzeichnet ist, dass** die Abdeckung (20) einen in Längsrichtung offenen Querschnitt aufweist, sodass die Abdeckung (20) die Sonde (19) nur teilweise winklig umgibt, wobei eine Längsöffnung (32) verbleibt, die der Mantelfläche (31) der Sonde (19) zugewandt ist; wobei sich die Abdeckung (20) mit einer Winkelausdehnung zwischen 150° und 250° um die Sonde (19) erstreckt.

2. Messvorrichtung nach Anspruch 1, wobei die Abdeckung (20) eine konkave innere Mantelfläche (34), die der Mantelfläche (31) der Sonde (19) zugewandt ist, und eine konvexe äußere Mantelfläche (35), die der konkaven inneren Mantelfläche (34) entgegengesetzt ist, aufweist.

3. Messvorrichtung nach einem der vorhergehenden Ansprüche, wobei die Abdeckung (20) über der Sonde (19) angeordnet ist, sodass sie eine vertikale Projektion der Sonde (19), die als Projektion der Sonde (19) auf eine horizontale Ebene parallel zu der freien Oberfläche (H) der Prozessflüssigkeit definiert ist, vollständig abdeckt und die Sonde (19) somit vor der Prozessflüssigkeit schützt, die in der Einrichtung (1) von oben nach unten fließt.

4. Messvorrichtung nach einem der vorhergehenden Ansprüche, wobei die Abdeckung (20) aus einem leitenden Material, insbesondere einem Metallmaterial, vorzugsweise einem Material der gleichen Art, oder aus dem gleichen Material wie die Sonde (19) hergestellt ist.

5. Messvorrichtung nach einem der vorhergehenden Ansprüche, wobei die Abdeckung (20) mittels Ankerstäben (37), die sich zwischen der Abdeckung (20) und der Sonde (19) erstrecken, mechanisch und elektrisch mit der Sonde (19) verbunden ist.

6. Messvorrichtung nach einem der vorhergehenden Ansprüche, wobei die Sonde (19) den Messabschnitt (28), der in Verwendung zumindest teilweise in die Prozessflüssigkeit eingetaucht ist und in dem distalen Ende (25) endet, und einen Verbindungsabschnitt (27), der an dem proximalen Ende (24) der Sonde (19) mit dem Radarmessgerät (18) verbunden ist, umfasst.

7. Messvorrichtung nach Anspruch 6, wobei der Verbindungsabschnitt (27) und der Messabschnitt (28) geradlinig und im Wesentlichen senkrecht zueinander sind und von einem gekrümmten Angliederungsabschnitt (29) zusammengefügt sind; und wobei sich der Verbindungsabschnitt (27) in der Einrichtung (1) radial, im Wesentlichen senkrecht zu einer in Verwendung der Einrichtung (1) vertikalen Längsachse (A), erstreckt, und sich der Messabschnitt (28) parallel zu der Achse (A) erstreckt; und wobei die Abdeckung (20) über dem Verbindungsabschnitt (27) und dem Angliederungsabschnitt (29) und seitlich neben dem Messabschnitt (28) angeordnet ist.

8. Messvorrichtung nach Anspruch 6, wobei der Verbindungsabschnitt (27) und der Messabschnitt (28) geradlinig und in Bezug aufeinander geneigt sind und von einem gekrümmten Angliederungsabschnitt (29) zusammengefügt sind; und wobei sich der Verbindungsabschnitt (27) in der Einrichtung (1) radial, im Wesentlichen senkrecht zu einer in Verwendung der Einrichtung (1) vertikalen Längsachse (A), erstreckt, und der Messabschnitt (28) in Bezug auf die Achse (A) geneigt ist; und wobei die Abdeckung (20) über dem Verbindungsabschnitt (27), dem Angliederungsabschnitt (29) und auch dem geneigten Messabschnitt (28) angeordnet ist.

9. Messvorrichtung nach Anspruch 6, wobei der Verbindungsabschnitt (27) und der Messabschnitt (28) entlang einer gemeinsamen geradlinigen Achse miteinander ausgerichtet sind und die Sonde (19) vollkommen gerade ist; wobei die Sonde (19) in Bezug auf eine in Verwendung der Einrichtung (1) vertikale Längsachse (A) geneigt ist; und wobei sich die Abdeckung (20) parallel zu der Sonde (19) und geradlinig und über der Sonde (19) erstreckt.

10. Messvorrichtung nach Anspruch 6, wobei die Sonde (19) von oben, durch eine obere Wand der Einrichtung (1) hindurch, in die Einrichtung (1) eingesetzt werden soll, und der Verbindungsabschnitt (27) und der Messabschnitt (28) entlang einer gemeinsamen geradlinigen Achse miteinander ausgerichtet sind; wobei die Sonde (19) in Bezug auf eine in Verwendung der Vorrichtung (1) vertikale Längsachse (A) geneigt ist, wobei die Abdeckung (20) parallel zu der Sonde (19) und über der Sonde (19) angeordnet ist.

11. Messvorrichtung nach Anspruch 6, wobei die Sonde (19) von unten, durch eine Bodenwand (9) der Einrichtung (1) hindurch, in die Einrichtung (1) eingesetzt werden soll; und wobei der Verbindungsabschnitt (27) und der Messabschnitt (28) geradlinig und im Wesentlichen parallel zueinander und zu einer in Verwendung der Einrichtung (1) vertikalen Längsachse (A) sind und von einem U-förmigen Angliederungsabschnitt (29) zusammengefügt sind; und wobei die Sonde (19) teilweise von einer Abdeckungsummantelung (40) umhüllt ist, die aus einem elektrisch isolierenden Material hergestellt ist und einen geschlossenen Querschnitt aufweist; wobei die Ummantelung (40) über dem Verbindungsabschnitt (27) und dem Angliederungsabschnitt (29) angeordnet ist und zumindest einen Teil des Messabschnitts (28) unabgedeckt lässt, der, in Verwendung, der Prozessflüssigkeit weiterhin ausgesetzt ist; und wobei die Abdeckung (20) seitlich neben dem Messabschnitt (28) und diesem zugewandt und über dem Angliederungsabschnitt (29) angeordnet ist.

12. Druckeinrichtung (1), zum Beispiel eine Einrichtung einer Harnstoffanlage, die mit einer Messvorrichtung (3) zur Messung eines Stands einer Prozessflüssigkeit in der Einrichtung versehen ist; **dadurch gekennzeichnet, dass** die Messvorrichtung (3) eine Messvorrichtung nach einem der vorhergehenden Ansprüche ist.

13. Einrichtung nach Anspruch 12, wobei die Einrichtung (1) eine Einrichtung ist, die Teil einer Harnstoffanlage, insbesondere eines Hochdruckabschnitts einer Harnstoffanlage, ist, beispielsweise ein Stripper, ein Harnstoffsynthesereaktor, ein Carbamat-Separator oder ein Carbamat-Kondensator.

14. Verfahren zur Messung eines Stands einer Prozessflüssigkeit in einer Druckeinrichtung, zum Beispiel einer Einrichtung einer Harnstoffanlage, das die folgenden Schritte umfasst:
- Aussenden von Mikrowellenimpulsen entlang einer Hohlleitersonde (19), die von einem Vollstabkörper (26) definiert ist und sich im Inneren der Einrichtung (1) unterhalb einer freien Oberfläche (H) der Prozessflüssigkeit erstreckt;
- Schützen der Sonde (19) vor der Prozessflüssigkeit, die in der Einrichtung (1) von oben nach unten fließt, und Minimieren von Signalstreuungen von der Sonde (19) mittels einer Begrenzungsabdeckung (20), die der Sonde zugeordnet ist und um mindestens einen Messabschnitt (28) der Sonde (19) angebracht ist, der zumindest teilweise in die Prozessflüssigkeit eingetaucht ist; wobei die Abdeckung (20) über der Sonde (19) und entlang des Messabschnitts (28) der Sonde (19) angeordnet ist, sodass sie die Sonde (19) außen umgibt, und radial von einer Mantelfläche (31) der Sonde (19) beabstandet ist,
- Erfassen von Impulsen, die von der Grenzfläche zwischen einer Flüssigphase und einer Gasphase, die in der Einrichtung (1) enthalten sind, reflektiert werden und entlang der Sonde (19) rückübertragen werden;
- Berechnen des Stands der Prozessflüssigkeit, die in der Einrichtung (1) enthalten ist, anhand der Differenz zwischen den Laufzeiten der reflektierten und übertragenen Mikrowellen;
**dadurch gekennzeichnet, dass** die Abdeckung (20) einen in Längsrichtung offenen Querschnitt aufweist, sodass die Abdeckung (20) die Sonde (19) nur teilweise winklig umgibt, wobei eine Längsöffnung (32) verbleibt, die der Mantelfläche (31) der Sonde (19) zugewandt ist, um eine Stauung der Prozessflüssigkeit zwischen der Abdeckung (20) und der Sonde (19) zu verhindern; wobei sich die Abdeckung (20) mit einer Winkelausdehnung zwischen 150° und 250° um die Sonde (19) erstreckt.

15. Messverfahren nach Anspruch 14, wobei die Abdeckung (20) über der Sonde (19) angeordnet ist, sodass sie eine vertikale Projektion der Sonde (19) vollständig abdeckt, um die Sonde (19) vor der Prozessflüssigkeit zu schützen, die in der Einrichtung (1) von oben nach unten fließt.

16. Messverfahren nach Anspruch 14 oder Anspruch 15, wobei die Abdeckung (20) aus einem leitenden Material, insbesondere einem Metallmaterial, vorzugsweise einem Material der gleichen Art, oder aus dem gleichen Material wie die Sonde (19) hergestellt ist.

17. Messverfahren nach einem der Ansprüche 14 bis 16, wobei die Abdeckung (20) mittels Ankerstäben (37), die sich zwischen der Abdeckung (20) und der Sonde (19) erstrecken, mechanisch und elektrisch mit der Sonde (19) verbunden ist.

## Revendications

1. Dispositif (3) pour la mesure d'un niveau de liquide de traitement dans un appareil sous pression, par exemple un appareil d'une installation de production d'urée, comprenant un instrument radar (18) positionné en utilisation à l'extérieur de l'appareil (1) et ayant un émetteur de micro-ondes et un récepteur de micro-ondes ; une sonde guide d'ondes (19) pour la transmission de micro-ondes, définie par un corps de tige solide (26) et s'étendant en utilisation à l'intérieur de l'appareil (1) entre une extrémité proximale (24), jointe à l'instrument radar (18), et une extrémité distale (25), immergée en utilisation dans le liquide de traitement au-dessous d'une surface libre (H) du liquide de traitement ; et un couvercle de confinement (20), agencé autour d'au moins une portion de mesure (28) de la sonde (19) au moins partiellement immergée en utilisation dans le liquide de traitement ; le couvercle (20) étant positionné au-dessus de la sonde (19) et le long de ladite portion de mesure (28) de la sonde (19) de façon à encercler la sonde (19) de manière externe, et étant espacé radialement d'une surface latérale (31) de la sonde (19) ; le dispositif de mesure (3) étant **caractérisé en ce que** le couvercle (20) possède une section transversale longitudinalement ouverte de sorte que le couvercle (20) n'encercle que partiellement la sonde (19) de manière angulaire, en laissant une ouverture longitudinale (32) en face de la surface latérale (31) de la sonde (19) ; le couvercle (20) s'étendant autour de la sonde (19) avec une étendue angulaire entre 150° et 250°.

2. Dispositif de mesure selon la revendication 1, dans lequel le couvercle (20) possède une surface latérale interne concave (34) en face de la surface latérale (31) de la sonde (19), et une surface latérale externe convexe (35), opposée à la surface latérale interne concave (34).

3. Dispositif de mesure selon l'une des revendications précédentes, dans lequel le couvercle (20) est positionné au-dessus de la sonde (19) de façon à recouvrir entièrement une projection verticale de la sonde (19), définie comme étant une projection de la sonde (19) sur un plan horizontal parallèle à la surface libre (H) du liquide de traitement, et à protéger ainsi la sonde (19) contre du liquide de traitement s'écoulant dans l'appareil (1) de haut en bas.

4. Dispositif de mesure selon l'une des revendications précédentes, dans lequel le couvercle (20) est constitué d'un matériau conducteur, en particulier d'un matériau métallique, de préférence d'un matériau du même type, ou du même matériau, que la sonde (19).

5. Dispositif de mesure selon l'une des revendications précédentes, dans lequel le couvercle (20) est relié mécaniquement et électriquement à la sonde (19) par des tirants (37) s'étendant entre le couvercle (20) et la sonde (19).

6. Dispositif de mesure selon l'une des revendications précédentes, dans lequel la sonde (19) comprend ladite portion de mesure (28), qui en utilisation est au moins partiellement immergée dans le liquide de traitement et se termine par l'extrémité distale (25), et une portion de liaison (27), reliée à l'instrument radar (18) à l'extrémité proximale (24) de la sonde (19).

7. Dispositif de mesure selon la revendication 6, dans lequel la portion de liaison (27) et la portion de mesure (28) sont rectilignes et sensiblement perpendiculaires l'une à l'autre et jointes par une portion de joint incurvée (29) ; et dans lequel la portion de liaison (27) s'étend radialement dans l'appareil (1) sensiblement perpendiculairement à un axe longitudinal (A), vertical en utilisation, de l'appareil (1), et la portion de mesure (28) s'étend parallèlement audit axe (A) ; et dans lequel le couvercle (20) est positionné au-dessus de la portion de liaison (27) et de la portion de joint (29) et latéralement à côté de la portion de mesure (28).

8. Dispositif de mesure selon la revendication 6, dans lequel la portion de liaison (27) et la portion de mesure (28) sont rectilignes et inclinées l'une par rapport à l'autre et sont jointes par une portion de joint incurvée (29) ; et dans lequel la portion de liaison (27) s'étend radialement dans l'appareil (1) sensiblement perpendiculairement à un axe longitudinal (A), vertical en utilisation, de l'appareil (1), et la portion de mesure (28) est inclinée par rapport audit axe (A) ; et dans lequel le couvercle (20) est positionné au-dessus de la portion de liaison (27), de la portion de joint (29), et également de la portion de mesure (28) inclinée.

9. Dispositif de mesure selon la revendication 6, dans lequel la portion de liaison (27) et la portion de mesure (28) sont alignées l'une avec l'autre le long d'un axe rectiligne commun et la sonde (19) est entièrement droite ; la sonde (19) étant inclinée par rapport à un axe longitudinal (A), vertical en utilisation, de l'appareil (1) ; et dans lequel le couvercle (20) s'étend parallèlement à la sonde (19) et de manière rectiligne et au-dessus de la sonde (19).

10. Dispositif de mesure selon la revendication 6, dans lequel la sonde (19) est destinée à être insérée dans l'appareil (1) par le haut, à travers une paroi supérieure de l'appareil (1), et la portion de liaison (27) et la portion de mesure (28) sont alignées l'une avec l'autre le long d'un axe rectiligne commun ; la sonde (19) étant inclinée par rapport à un axe longitudinal (A), vertical en utilisation, de l'appareil (1), avec le couvercle (20) positionné parallèlement à la sonde (19) et au-dessus de la sonde (19).

11. Dispositif de mesure selon la revendication 6, dans lequel la sonde (19) est destinée à être insérée dans l'appareil (1) par le bas, à travers une paroi inférieure (9) de l'appareil (1) ; et la portion de liaison (27) et la portion de mesure (28) sont rectilignes et sensiblement parallèles l'une à l'autre et à un axe longitudinal (A), vertical en utilisation, de l'appareil (1) et sont jointes par une portion de joint en forme de U (29) ; et dans lequel la sonde (19) est partiellement recouverte par une gaine de recouvrement (40) constituée d'un matériau électriquement isolant et ayant une section transversale fermée ; la gaine (40) étant positionnée autour de la portion de liaison (27) et de la portion de joint (29), et laissant découvert au moins une partie de la portion de mesure (28) qui reste exposée, en utilisation, au liquide de traitement ; et dans lequel le couvercle (20) est positionné latéralement à côté et en face de la portion de mesure (28) et au-dessus de la portion de joint (29).

12. Appareil sous pression (1), par exemple un appareil d'une installation de production d'urée, muni d'un dispositif de mesure (3) pour la mesure d'un niveau d'un liquide de traitement dans l'appareil ; **caractérisé en ce que** le dispositif de mesure (3) est un dispositif de mesure selon l'une des revendications précédentes.

13. Appareil selon la revendication 12, dans lequel l'appareil (1) est un appareil qui fait partie d'une installation de production d'urée, en particulier d'une section à haute pression d'une installation de production d'urée, par exemple un extracteur, un réacteur de synthèse d'urée, un séparateur de carbamate ou un condenseur de carbamate.

14. Procédé pour la mesure d'un niveau d'un liquide de traitement dans un appareil sous pression, par exemple un appareil d'une installation de production d'urée, comprenant les étapes de :
- l'envoi d'impulsions micro-ondes le long d'une sonde guide d'ondes (19), définie par un corps de tige solide (26) et s'étendant à l'intérieur de l'appareil (1) au-dessous d'une surface libre (H) du liquide de traitement ;
- la protection de la sonde (19) contre du liquide de traitement s'écoulant de haut en bas dans l'appareil (1) et la minimisation de dispersions de signal provenant de la sonde (19) au moyen d'un couvercle de confinement (20) associé à la sonde et agencé autour d'au moins une portion de mesure (28) de la sonde (19) immergée au moins partiellement dans le liquide de traitement ; le couvercle (20) étant positionné au-dessus de la sonde (19) et le long de ladite portion de mesure (28) de la sonde (19) de façon à encercler la sonde (19) de manière externe, et étant radialement espacé d'une surface latérale (31) de la sonde (19) ;
- la détection d'impulsions réfléchies par l'interface entre une phase liquide et une phase gazeuse contenues dans l'appareil (1), et retransmises le long de la sonde (19) ;
- la calcul du niveau du liquide de traitement contenu dans l'appareil (1) à partir de la différence entre les temps de trajet des micro-ondes réfléchies et transmises ;
**caractérisé en ce que** le couvercle (20) possède une section transversale longitudinalement ouverte de sorte que le couvercle (20) n'encercle que partiellement la sonde (19) de manière angulaire, en laissant une ouverture longitudinale (32) en face de la surface latérale (31) de la sonde (19) de façon à éviter une stagnation du liquide de traitement entre le couvercle (20) et la sonde (19) ; le couvercle (20) s'étendant autour de la sonde (19) avec une étendue angulaire entre 150° et 250°.

15. Procédé de mesure selon la revendication 14, dans lequel le couvercle (20) est positionné au-dessus de la sonde (19) de façon à recouvrir entièrement une projection verticale de la sonde (19), afin de protéger la sonde (19) contre du liquide de traitement s'écoulant dans l'appareil (1) de haut en bas.

16. Procédé de mesure selon la revendication 14 ou 15, dans lequel le couvercle (20) est constitué d'un matériau conducteur, en particulier d'un matériau métallique, de préférence d'un matériau du même type, ou du même matériau, que la sonde (19).

17. Procédé de mesure selon l'une des revendications 14 à 16, dans lequel le couvercle (20) est relié mécaniquement et électriquement à la sonde (19) par des tirants (37) s'étendant entre le couvercle (20) et la sonde (19).
